# EUROPEAN PATENT APPLICATION

(11) **EP 2 908 499 A1**
(43) Date of publication of application: **19.08.2015**
(21) Application number: 14155111.9
(22) Date of filing: 13.02.2014
(51) Int. Cl.: H04L 29/08, G06F 9/44, G06F 9/445, H04W 4/00, H04W 4/20

(54) **Method, system and software product for delivering interactive invitational content into mobile phone applications**

(71) Applicant: Curlify OÜ, 10111 Tallinn (EE)
(72) Inventor: Myllynen, Harri Tapio, 10111 Tallinn (EE)
(74) Representative: Koppel, Mart Enn

(57) **Abstract**

A method, a system and a software product for delivering interactive invitational content such as interactive static and moving advertisements into mobile applications that are run on mobile devices, such as mobile phones, smart phones and tablet computing devices and PDAs as well as other mobile devices with touch screens and/or other input devices for controlling the interactive advertisements on the screen of such mobile device.

## Description

### Technical field

The present invention relates to a method, a system and a software product for delivering interactive invitational content such as interactive static and moving advertisements into mobile applications that are run on mobile devices such as mobile phones, smart phones, tablet computing devices and PDAs as well as other mobile devices with touch screens and/or other input devices for controlling the interactive advertisements on the screen of such mobile device.

### Background art

The use of mobile phones around the world has increased dramatically. Mobile phones can now handle many types of multimedia content. Consumers can navigate the World Wide Web from their mobile phones to much the same degree as from their home computers. The proliferation of these new multimedia mobile phone devices has accordingly created a ripe market for content delivery, which both third-party content providers and wireless carrier companies have become increasingly interested in.

Mobile devices, and particularly mobile telephones, tablet computing devices, and PDAs are a practical invitational content (such as advertisements) delivery medium since many mobile device users spend significant amounts of time with their mobile devices. Much of this time, however, is now spent in applications as opposed to merely using the device as a communication device. For example, many consumers utilize their mobile devices as a GPS device, as a portal to various social networking applications, and as a gaming device. Only a small percentage of a user's operation of the device may be spent as an actual communication device. These applications are often developed by third parties (e.g., people other than the device manufacturer or the network provider), and can limit the ability of content developers to reach the end users. Some companies may provide application programming interfaces (APIs) to developers that allow access to content delivery networks or device operating system functionality, but the ability to access multiple content delivery networks and render media-rich content all within the context of an application is not currently supported.

There are also various technical difficulties with invitational content delivery on mobile devices. Some mobile device content requires multiple applications to execute on a mobile device in order to display different content. These multiple applications can sometimes overload a mobile device's operating system, causing the device to slow down or to malfunction. Some mobile device operating systems cannot automatically initiate an application to display invitational content. Also, many devices are only able to display invitational content through a web/WAP portal, requiring additional transmission time from the user to view the advertising information.

Mobile applications for mobile devices are currently developed in one of the following ways:
1) native applications are written in computer languages precompiled to be used in the native mobile device operating system (OS) environment. Such applications may in principle allow updating content from a web server, but they do not allow to update and run application code;
2) HTML5 applications are developed using web tools (HTML, CSS and Javascript), which allow updating application code and content from a web server and present it in a mobile browser; and
3) hybrid applications, that are combining both native elements and the HTML5 elements.

Native mobile applications are increasingly used instead of mobile websites to deliver content and enhance functionality of mobile devices. At the same time, advertising is increasingly used as a way to fund various mobile services.

Known is Jumptap.com, providing a service for publishers to facilitate showing web advertisements to mobile websites with only minor modifications.

However, current methods of advertising in mobile applications and services still rely on models developed for internet websites, such as banners and streamed videos.

Known is a published US patent application No US20110113089, disclosing a technology providing invitational content having enhanced content and capabilities to make the invitational content more engaging and useful for users. Specifically, the invitational content can be configured to call on and utilize core operating system functions, additional web content, and other mobile device applications.

These existing methods have serious drawbacks limiting their usage, for example mobile networks are often too slow for videos and advertising designed for websites looks strikingly different from as well as inferior to native mobile applications.

There is a need for an alternative method described in this application.

### Disclosure of the invention

The invented method is a novel way of displaying and delivering interactive media-rich invitational content such as static or animated advertisements into native mobile applications.

As described, the advertisements will be delivered as collections of source code and compressed assets - and are compiled into machine code only when delivered into the native application, they deliver, open and run fast, producing a much improved overall user experience.

An object of the present invention is to provide a convenient method of delivering interactive animated display advertisements to a mobile device such as mobile phones, smart phones and tablets, using native mobile applications.

According to one embodiment of the invention, disclosed is a computer-implemented method comprising the steps running a native mobile application on a mobile device; requesting from a content delivery network a media-rich-invitational-content application by the native mobile application for display within the native mobile application; receiving the media-rich-invitational-content application from said content delivery network;
presenting an initial static view of the media-rich-invitational-content application in a view port within the native mobile application; accepting interaction like touch or sensor events within the initial static view of the media-rich-invitational content; compiling the source code of the media-rich-invitational content into machine code or byte code;
executing the compiled source code using a embedded virtual machine thereby presenting a full content view of the media-rich-invitational content and utilizing by the media-rich-invitational content at least one content enhancing function of the mobile device.

The view port maybe provided by an embedded library in the native mobile application which is configured to access core operating system parameters.

The full content view of the media-rich-invitational-content application may be rendered in the native mobile application.

The method may further comprise exiting the full content view of the media-rich-invitational content and returning the interaction like touch and sensor events back to the native mobile application without re-launching the application.

The method may be modified so that the native mobile application returns to the state that the application was in when the interaction with the initial view of the media-rich-invitational-content application was accepted.

### Brief description of the drawings

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings:
Fig 1 is a block diagram of a system in which the invented method according to one embodiment of the invention can be used;
FIG. 2 illustrates one exemplary approach to delivering media rich advertisements to a native mobile application;
Fig 3 illustrates a flow chart illustrating one or more method of the embodiments; and
Fig 4 illustrates a flow chart illustrating one or more method of the embodiments.

### Mode(s) for carrying out the invention

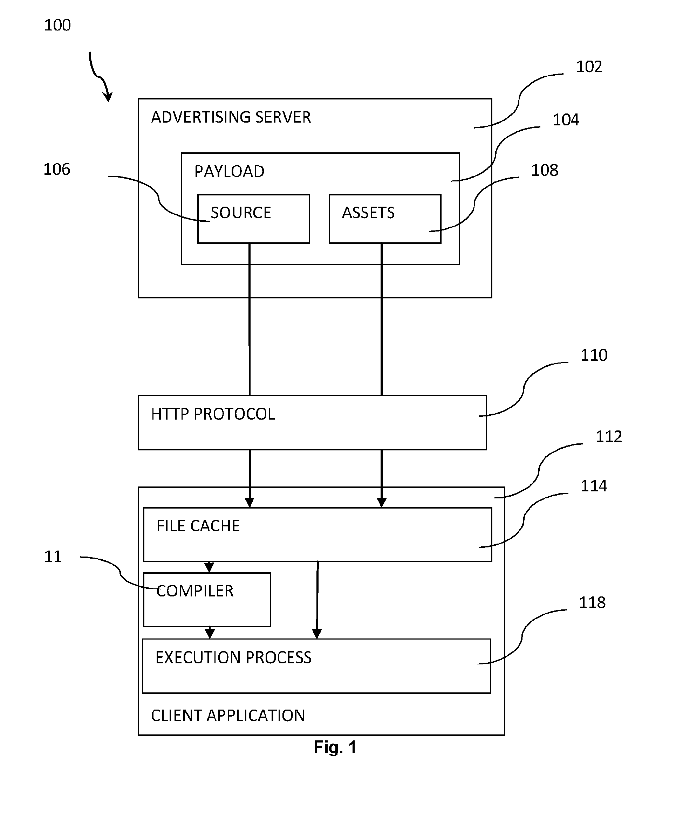

Fig 1 is a block diagram of a typical system in which the invented method can be used. The system 100 comprises an advertising server 102 providing payload 104, comprising a source code 106 and assets 108 such as informational or invitational content, such as static or moving advertisement. The payload 104 is delivered over a data network, such as internet, using, e.g., a http protocol 110, to a mobile device such as mobile phone, smart phone, PDA or tablet computing device, running a client application 112. The client application comprises a file cache 114, a compiler 116 for compiling the source code into a machine code, and an execution process 118.

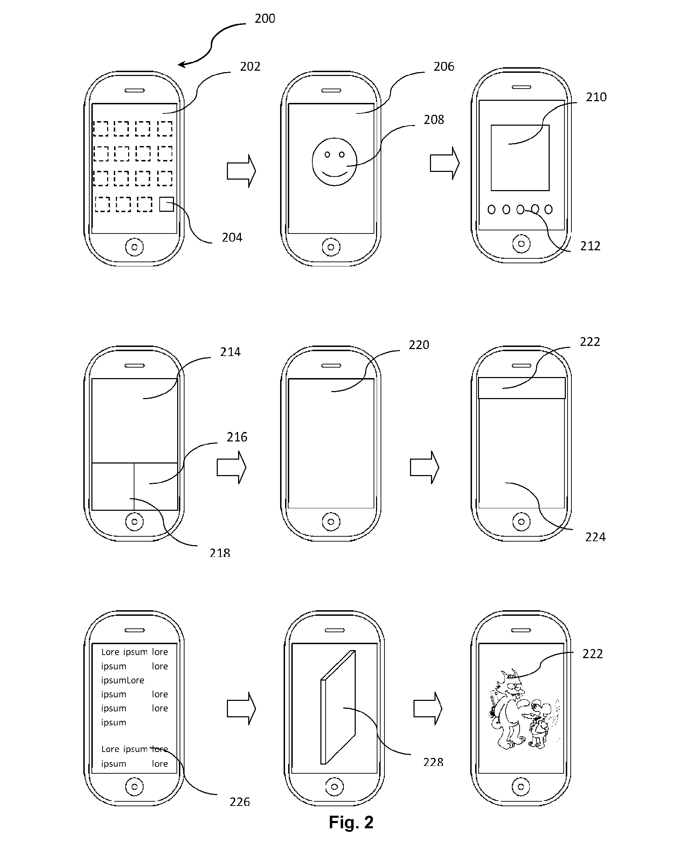

FIG. 2 illustrates one exemplary approach to delivering media rich advertisements to a native mobile application. A mobile device 200 comprises a display 202, with one or several icons 204. Icon 206 can be used to start the mobile application. At first start of the mobile application, a starting screen with preferably static image(s) 208 is shown. Thereafter, or alternatively, a preview images, preferably static image(s) 210 are shown. Several images may be scrolled using on screen buttons 212. The display may be divided into areas of different size 214, 216 and 218, or full screen mode 220 may be used. Informational area 222 may be included on the full screen 224. The screen may be text screen 226, may contain 3D animated objects 228, or video content 230. Moving between screens can be accomplished by using appropriate input device, including tapping, swiping, clicking, etc on the touch screen display, or tilting, waving, shaking the device, waving hand or fingers in front of the device, etc., or receive input from other sensors or input devices of the mobile device (including GPS inputs, accelerometer inputs, compass inputs, camera inputs, temperature sensor, barometer, altimeter, accelerometer, light sensor, sound sensor, proximity sensor input, or input from Wi-Fi, Bluetooth or NFC connections, etc).

The invitational content according to the invention comprises interactive media-rich advertisements that are preferably full screen advertisements on the screen of the mobile device and can take any form, including information articles, informational, customer games, games, including serious gaming, videos, 3D posters, etc.

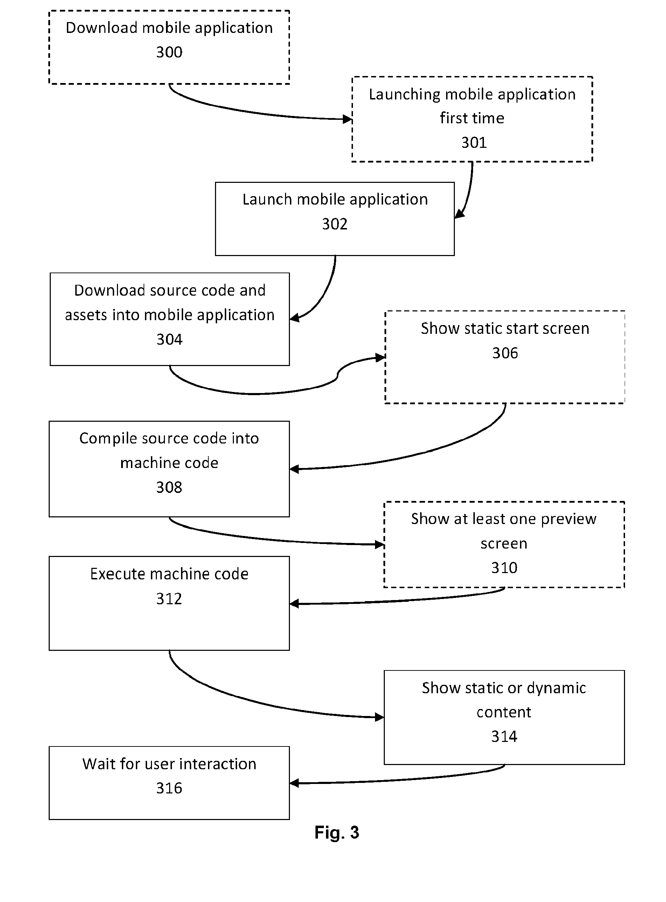

Fig 3 shows a flow chart of a method according to one embodiment of the invention. The method comprises downloading 300 a mobile application (e.g., from application stores like Google Play for applications for Android, or AppStore for applications for iOS, etc), and launching it for the first time 301. During first launch, the application is set up for the mobile device and/or the user. Launching 302 the mobile application second and subsequent times is much quicker. The method further comprises downloading 304 a packet comprising source code and assets of the invitational content such as advertisement, into the native application, compiling 308 by said mobile application the source code into machine (or byte) code, executing 312 the machine code to show 314 static or dynamic media rich content and wait 316 for user interaction. The method may further comprise showing 306 static start screen to allow the mobile application to compile the source code on the background, or showing 310 at least one preview screen of the media rich content either during setup, or as desired during the use of the mobile application.

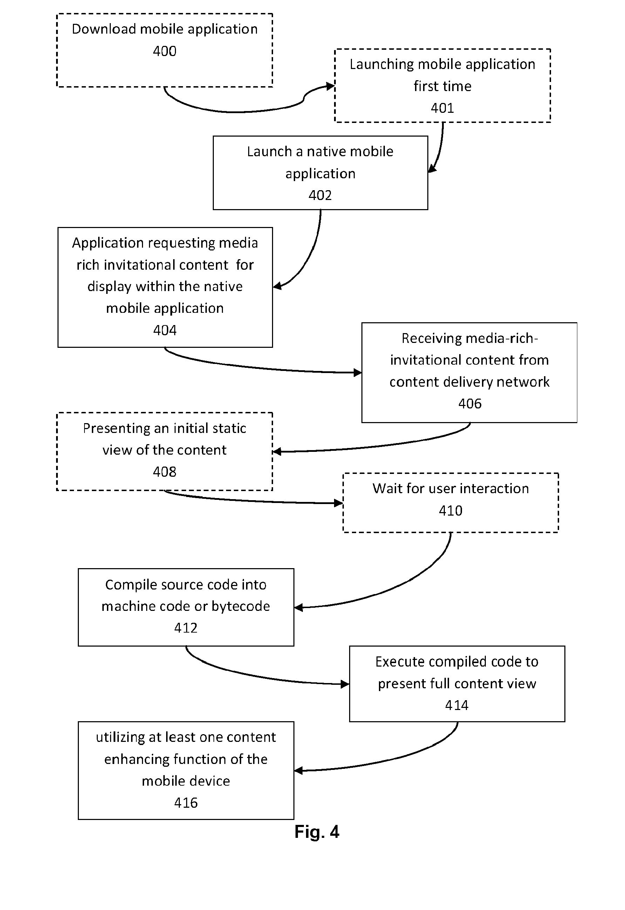

Fig 4 shows a flow chart of a modified method according to one embodiment of the invention. Again, the method may first require that the mobile application is downloaded and launched first time (steps 400, 401). After launching 402 the native mobile application second and subsequent times, the application requests 404 media rich invitational content for display within the native mobile application from a content delivery network. After receiving 406 media rich invitational content from the content delivery network in the form of compressed packet, the source code is compiled 412 into machine code or byte code and executed 414. At least one content enhancing function is used 416 to modify or control the media rich invitational content.

The request to a content delivery network, such as advertising server, may be an http request. Such request may include some or all the following parameters:
* Unique ID of the native application
* Unique ID of the mobile user
* Geo-location (longitude, latitude) of the mobile user.

The advertising server preferably returns in a compressed package all advertisements that are valid to the current user session. The package may comprise:
* a reference file listing metadata for all advertisements in the package
* executable program files for each advertisement
* Other textual and binary asset files for each advertisement.

The reference file may preferably list the following metadata:
* unique id of each advertisement
* optional display name of each advertisement
* timestamps representing valid display time of each advertisement
* optional display icon file (hereinafter: icon) of each advertisement
* opening screen image file (hereinafter: splash) of each advertisement
* Filenames of each other textual or binary asset delivered.

The native client mobile application has an advertisement display subsystem, comprising the following elements embedded allowing displaying of the advertisements:
* an http requester for handling fetching of the reference file and files the reference file links to;
* a compiler for converting the advertisement program files into machine code
* file cache for storing fetched advertisements into a local file system of the mobile device for multiple display views; and
* application program interface layer: allowing advertisement program to access underlying operating system functionalities

Such advertisement typically comprises the following elements:
* an advertisement ID;
* an advertisement name;
* a timestamp representing advertisement expiration information;
* a display icon file (hereinafter: icon);
* an opening screen image file (hereinafter: splash)
* an advertisement payload (hereinafter: payload), a compressed archive file comprising:
   - an advertisement program files, either in source code or precompiled byte code; and
   - advertisement assets, comprising image, audio, video and/or text files;
* a reference file (hereinafter: reference), comprising links to current advertisements, with separate links to the icon, the splash, the payload and a checksum of the payload.

The reference file is generated on demand using http protocol and icon, the splash and payload files are placed on a web server.

The native client application is run on the mobile device. It comprises an advertisement display subsystem, comprising the following embedded elements for displaying of the advertisements:
* a http requester for handling fetching of the reference file and other files the reference file is linked to;
* a compiler for converting the advertisement program files into machine language;
*a file cache for storing the fetched advertisements into a local file system for multiple display views;
*an application program interface layer for allowing the advertisement program to access underlying operating system functionalities.

The native client application is adapted to display the advertisements as follows:
- advertisement display subsystem fetches the reference file upon application start-up;
- advertisement display subsystem fetches icons, splashes and payloads in the background when application is already running;
- application can optionally display advertisement names and icons where appropriate;
- client application requests an advertisement from advertisement display subsystem;
- advertisement display subsystem first displays the splash;
- during the splash is shown, the actual compiled advertisement program is launched and program control is transferred to the advertisement program; and
- control is resumed back to app upon user interaction, such as pressing a close button or a gesture, such as swipe.

As used herein, mobile devices include, but are not necessarily limited to, electronic-communication devices with Internet access capability. In particular, mobile devices include mobile phones and other wireless-handheld devices, e.g., Smartphones, such as IPHONE, or BLACKBERRY, Portable-Media-Playing Devices such as IPOD, or ZUNE, and Tablet Computers such as IPAD, or any other type of portable electronic communication device running a mobile operating system platform such as IOS, ANDROID, etc.

The current actual implementation of the method and mobile application is based on LuaJIT2 and FFI which enables downloadable invitational content such as advertisements to use underlying operating system functionality to any extent desired, results in user experience similar to native mobile games

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope and spirit of the invention as claimed.

## Claims

1. A computer-implemented method comprising:
running a native mobile application on a mobile device;
requesting from a content delivery network a media-rich-invitational-content application by the native mobile application for display within the native mobile application;
receiving the media-rich-invitational-content application from said content delivery network;
presenting an initial static view of the media-rich-invitational-content application in a view port within the native mobile application;
accepting interaction like touch or sensor events within the initial static view of the media-rich-invitational content;
compiling the source code of the media-rich-invitational content into an executable code such as machine code or byte code;
executing the compiled source code using a embedded virtual machine thereby presenting a full content view of the media-rich-invitational content; and
utilizing by the media-rich-invitational content at least one content enhancing function of the mobile device.

2. The computer-implemented method of claim 1, wherein the viewport is provided by an embedded library in the native mobile application which is configured to access core operating system parameters.

3. The computer-implemented method of claim 1, wherein the full content view of the media-rich-invitational-content application is rendered in the native mobile application.

4. The computer-implemented method of claim 1, further comprising:
exiting the full content view of the media-rich-invitational content; and
returning the interaction like touch and sensor events back to the native mobile application without re-launching the application.

5. The computer-implemented method of claim 4, wherein the native mobile application returns to the state that the application was in when the interaction with the initial view of the media-rich-invitational-content application was accepted.

6. Method for delivering interactive media rich invitational content into a native application running on a mobile device, connected with a content delivery network, wherein the method comprises:
running a native mobile application on said mobile device;
receiving from a content delivery network a package of invitational content in response to a request from said native mobile application, said package comprising a source code for an executable program file for each advertisement;
compiling said source code into an executable program by said native mobile application;
running said executable program within said native application to display the invitational content and simultaneously transferring the program control of the screen to the advertisement program; and
resuming the control back to the native application upon user interaction with said mobile device.

7. The method as in claim 6, the method comprising an advertising display subsystem fetching the reference file upon application start-up; the advertisement display subsystem fetching icons, splashes and payloads in the background when application is already running; said mobile application requesting an advertisement from said advertisement display subsystem; said advertisement display subsystem first displaying the splash; during the splash is shown, launching the compiled advertisement program and transferring the program control to the advertisement program; and resuming back the control upon user interaction, such as pressing a close button or a gesture, such as swipe.

8. The method as in claims 6 to 7, the package comprising a reference file listing metadata for all advertisements returned; source code files for each advertisement; and textual and binary asset files for each advertisement.

9. The method as in claims 6 to 8, the reference file comprising a unique id of each advertisement; optional display name of each advertisement; timestamps representing valid display time of each advertisement; optional display icon file of each advertisement; opening screen image file of each advertisement; filenames of each other textual or binary asset delivered.

10. The method as in claims 6 to 9, the mobile application comprising a display subsystem, comprising following elements embedded allowing displaying of the ads: http requester: handling fetching of reference file and files the reference file links to; compiler: converting the source code files into machine language; file cache: allowing storing fetched ads into the local file system for multiple display views; application program interface layer: allowing advertisement program to access underlying operating system functionalities.
